# EUROPEAN PATENT APPLICATION

(11) **EP 4 534 515 A1**
(43) Date of publication of application: **09.04.2025**
(21) Application number: 23202196.4
(22) Date of filing: 06.10.2023
(51) Int. Cl.: C05C 3/00, C05C 5/00, C05D 3/02, C05F 11/02, C05F 11/08

(54) **FERTILIZER COMPRISING CARBON, NITROGEN, SULFUR, AND MICROORGANISMS**

(71) Applicant: Sabic Agri-Nutrients Company, 31961 Jubail (SA)
(72) Inventor: AL-RABHI, Mohamed, Sugar Land, TX, 77478 (US); MAMEDOV, Aghaddin, Sugar Land, TX, 77478 (US)
(74) Representative: J A Kemp LLP

(57) **Abstract**

A fertilizer composition comprising calcium nitrate (Ca(NO₃)₂), ammonium sulfate ((NH₄)₂SO₄), a carbon source, and a plurality of live microorganisms and methods for producing and using the same are disclosed.

## Description

### BACKGROUND

### A. Field of the invention

The invention generally concerns fertilizer compositions containing a microbes and methods of making the same. In particular embodiments, the fertilizer composition comprises calcium nitrate (Ca(NO₃)₂), ammonium sulfate ((NH₄)₂SO₄), a carbon source, and a plurality of live microorganisms.

### B. Description of related art

Soil nutrients, such as nitrogen, phosphorus, potassium, and sulfur, as well as trace elements such as iron, zinc, copper, and magnesium, are useful for achieving thriving agriculture and growth of plants. Upon repeated planting cycles, the quantity of these nutrients in the soil may be depleted, resulting in reduced plant growth and decreased production. To counter this effect, fertilizers have been developed to help replace the depleted vital nutrients. Single-nutrient fertilizers and multi-nutrient fertilizers, such as fertilizer blends, have been developed to meet the varied needs of crop production worldwide.

Soil does not comprise just nutrients, it also comprises mineral substances, organic matter, and microorganisms. The role and activities of microorganisms in the soil is important for nutrient uptake by plants (e.g., via the root system), as beneficial microorganisms in the soil can directly participate in formation of soil fertility, e.g., conversion of substances and energy in the soil, formation and decomposition of humus and/or other organic material, release and/or fixation of trace elements and/or nutrients, fixation of nitrogen, etc.

However, in a purely natural state, the quantity of beneficial microorganisms in the soil may decrease and/or be insufficient for the agricultural yields anticipated by modern agrarian methods. Therefore, similar to the replenishment of soil using fertilizers comprising nutrients, soil may also need to be replenished with beneficial microorganisms.

Currently, most supplemental microorganisms are delivered to the soil for end use either: (i) directly in their commercial form (e.g., as a solid and/or liquid form fertilizer), (ii) in solution with irrigation water, (iii) coated to seeds under ambient temperature conditions, or (iv) coated to fertilizers under ambient temperature conditions. These delivery methods are limited in scope and also limit the type of microorganisms that can be utilized. There exists a need in the field to be able to widen the scope of microorganisms used and/or widen the scope of microorganism delivery methods when utilized in combination with various fertilizers. Some fertilizers, especially those highly acidic or basic, can be harmful to microorganisms by contact. In addition, high temperatures associated with fertilizer creation can render most microorganisms inactive and/or inefficient.

### SUMMARY

A discovery has been made that provides a solution to at least some of the problems associated with production, characteristics of, and/or use of combination fertilizers comprising fertilizer and microorganisms. In particular, disclosed herein are microbe-enhanced fertilizers comprising calcium nitrate (Ca(NO₃)₂), ammonium sulfate ((NH₄)₂SO₄), a carbon source, and a plurality of live microorganisms. The sources of the ingredients can include waste products and green sources. Non-limiting examples include use of calcium sulfate as a reactant when the calcium sulfate is from a waste source such as from production of phosphoric acid, use of carbon black waste from a decomposition of methane refinery as a carbon source, and/or use of green nitric acid as a reactant. Further the microbe-enhanced fertilizer composition enables delivery of stable microorganisms along with each granule of fertilizer, where the microorganism is needed and/or over time as the fertilizer degrades. Additionally, the microbe-enhanced fertilizer composition can have an increased microorganism and/or fertilizer shelf-life.

In some aspects, the fertilizer composition comprises or consists of calcium nitrate (Ca(NO₃)₂), ammonium sulfate ((NH₄)₂SO₄), a carbon source, and a plurality of live microorganisms.

Certain aspects are directed to a fertilizer composition comprising the carbon source comprising a char, an activated carbon, carbon black, and/or coal. In some instances, the carbon source is a carbon black. The carbon black may, in some instances, be a product of decomposition of methane. In some aspects, the carbon source may be derived from a refinery process and/or a hydrogen production process. In some aspects, the carbon source may be derived from a natural gas and/or a shale gas. In some aspects, the carbon source is a porous carbon black.

In some aspects, the fertilizer composition comprises microorganisms, wherein the microorganisms comprise diazotrophic bacteria, Azospirillum species, Azotobacter species, *Frateuria aurantia,* Bacillus species, endophytes, nitrogen fixing microorganism, methylotrophs, comammox microorganism, phosphorus solubilizing microorganism, Nitrospira species, Methylobacterium species, and/or pink pigmented facultative methylotrophs (PPFM-trophs).

In certain aspects, the fertilizer composition does not contain any one or more of the group consisting of compost, humic acid, Mg, Br, Fe, urea, ammonium nitrate, ammonium phosphate, diammonium phosphate, sulfate of ammonia, muriate of potash, potassium sulfate, magnesium carbonate, silicon, potassium nitrate, phosphate rock, lime, zeolite, hydrochloric acid, leopardite, torrefied organic waste comprising labile carbon, charcoal, urea, and/or calcium cyanamide.

In some aspects, at least a portion of the microorganisms in the fertilizer composition may be comprised in a coating of the fertilizer composition. In some aspects, any one of a calcium nitrate (Ca(NO₃)₂), ammonium sulfate ((NH₄)₂SO₄), and/or the carbon source may be at least partially surrounded with the microorganism. In some aspects, the microorganism is at least partially surrounded with a calcium nitrate (Ca(NO₃)₂), ammonium sulfate ((NH₄)₂SO₄), and/or the carbon source.

In some aspects, the fertilizer composition further comprising calcium sulfate (CaSO₄), nitric acid (HNO₃), sulfuric acid (H₂SO₄), and/or ammonium hydroxide (NH₄OH).

In certain aspects, the fertilizer composition contains at least any one of, at most any one of, equal to any one of, or between any two of 80, 81, 82, 83, 84, 85, 86, 87, 88, 89, 90, 91, 92, 93, 94, 95, 96, 97, 98 or 99 wt.% of a combination of the calcium nitrate (Ca(NO₃)₂) and the ammonium sulfate ((NH₄)₂SO₄), at least any one of, at most any one of, equal to any one of, or between any two of 3, 4, 5, 6, 7, 8, 9, 10, 11, 12, 13, 14, 15, 16, 17, 18, 19 or 20 wt. % of the carbon source, and/or at least any one of, at most any one of, equal to any one of, or between any two of 0.01, 0.03, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95 or 1 wt. % of the plurality of live microorganism based on the total weight of the fertilizer composition.

In some aspects, the fertilizer composition contains at least any one of, at most any one of, equal to any one of, or between any two of 10, 11, 12, 13, 14, 15, 16, 17, 18, 19, 20, 21, 22, 23, 24 or 25 wt. % of nitrogen, contains at least any one of, at most any one of, equal to any one of, or between any two of 3, 4, 5, 6, 7, or 8 wt. % sulfur, at least any one of, at most any one of, equal to any one of, or between any two of 5, 6, 7, 8, 9, 10, 11, 12, 13, 14, or 15 wt. % calcium, at least any one of, at most any one of, equal to any one of, or between any two of 5, 6, 7, 8, 9, 10, 11, 12, 13, 14, or 15 wt.% carbon, and/or at least any one of, at most any one of, equal to any one of, or between any two of 0.05, 0.1, 0.15, 0.2, 0.25, 0.3, 0.35, 0.4, 0.45, 0.5, wt. % of the plurality of live microorganism based on the total weight of the fertilizer composition.

In some aspects, the fertilizer composition is a solid fertilizer. In some aspects, the fertilizer composition is a slurry. In some aspects, the fertilizer is a liquid. In some aspects, the fertilizer composition is capable of being, or is, blended with other fertilizers. In some aspects, the fertilizer composition is capable of being used in fertigation. In some aspects, the fertilizer composition is capable of being used in a foliar spray.

Certain aspects are directed to a method of producing the fertilizer composition, including any fertilizer described herein. The method can include steps (a), (b), (c), and/or (d). Step (a) includes contacting calcium sulfate (CaSO₄) with nitric acid (HNO₃), to generate a first reaction product comprising calcium nitrate (Ca(NO₃)₂) and sulfuric acid (H₂SO₄). Step (b) includes contacting the first reaction product, or sulfuric acid, with a source of ammonium to generate a second reaction product comprising ammonium sulfate ((NH₄)₂SO₄). In some instances, the second reaction product further comprises calcium nitrate (Ca(NO₃)₂) generated in step (a). Step (c) includes contacting the second reaction product with a carbon source to form a fertilizer and carbon mixture. Step (d) includes contacting the mixture of step (d) and/or the second reaction product with a plurality of live microorganisms. In some instances, the plurality of live microorganisms contacts the second reaction product at the same time, before, or after the second reaction product is contacted with the carbon source. In some instances, step (c) comprises contacting the second reaction product with the carbon source to form a mixture, then contacting the mixture with the plurality of live microorganisms and mixing.

In some instances, method step (c) comprises at least partially coating the second reaction product or partially coating the second reaction product and carbon source with at least a portion of the live microorganisms. In some aspects, the fertilizer composition comprises or consists of calcium nitrate (Ca(NO₃)₂), ammonium sulfate ((NH₄)₂SO₄), a carbon source, and a plurality of live microorganisms. In some instances, the fertilizer composition is any of the fertilizer compositions described herein that comprise or consist of calcium nitrate (Ca(NO₃)₂), ammonium sulfate ((NH₄)₂SO₄), a carbon source, and a plurality of live microorganisms.

In certain instances, at least a portion of the nitric acid is derived from a renewable energy source. In certain instances, at least a portion of the calcium sulfate (CaSO₄) is a waste gypsum. In certain instances, at least a portion of the waste gypsum can be a red gypsum, phosphogypsum, and/or flue gas gypsum. In some aspects, the carbon source is a carbon containing waste, such as carbon black or biochar.

In some embodiments, methods of fertilizing are described. A method can include applying a fertilizer composition, and/or blended or compounded fertilizer composition described herein to a portion of a soil, a crop, water, or any combination of the soil, the water, and the crop. In some embodiments, the soil is at least partially or fully submerged under water (e.g., rice paddy crops) and the granules sink in the water to contact the soil.

Certain embodiments of the present invention are characterized through the following aspects.

Aspect 1 concerns a fertilizer composition comprising calcium nitrate (Ca(NO₃)₂), ammonium sulfate ((NH₄)₂SO₄), a carbon source, and a plurality of live microorganisms, wherein the carbon source comprises char, activated carbon, carbon black, and/or coal.

Aspect 2 concerns the fertilizer composition of aspect 1, wherein the microorganisms comprise diazotrophic bacteria, Azospirillum species, Azotobacter species, Frateuria aurantia, Bacillus species, endophytes, nitrogen fixing microorganism, methylotrophs, comammox microorganism, phosphorus solubilizing microorganism, Nitrospira species, Methylobacterium species, and/or pink pigmented facultative methylotrophs (PPFM-trophs).

Aspect 3 concerns the fertilizer composition of any one of aspects 1 to 2, wherein the composition does not comprise one or more of the group consisting of compost, humic acid, Mg, Br, Fe, urea, ammonium nitrate, ammonium phosphate, potassium nitrate, phosphate rock, lime, zeolite, and calcium cyanamide.

Aspect 4 concerns the fertilizer composition of any one of aspects 1 to 3, wherein the carbon source is derived from a refinery process and/or a hydrogen production process.

Aspect 5 concerns the fertilizer composition of any one of aspects 1 to 4, where in the carbon source is derived from a natural gas and/or a shale gas.

Aspect 6 concerns the fertilizer composition of any one of aspects 1 to 5, wherein at least a portion of the microorganisms are comprised in a coating of the fertilizer composition.

Aspect 7 concerns the fertilizer composition of any one of aspects 1 to 6, wherein the calcium nitrate (Ca(NO₃)₂), ammonium sulfate ((NH₄)₂SO₄), and/or carbon source at least partially surrounds the microorganism.

Aspect 8 concerns the fertilizer composition of any one of aspects 1 to 7, wherein the carbon source is a carbon black.

Aspect 9 concerns the fertilizer composition of any one of aspects 1 to 8, wherein the carbon source is a porous carbon black.

Aspect 10 concerns the fertilizer composition of any one of aspects 1 to 9, further comprising calcium sulfate (CaSO₄), nitric acid (HNO₃), sulfuric acid (H₂SO₄), and/or ammonium hydroxide (NH₄OH).

Aspect 11 concerns the fertilizer composition of any one of aspects 1 to 10, comprising 84 to 94.95 wt. % of a combination of the calcium nitrate (Ca(NO₃)₂) and the ammonium sulfate ((NH₄)₂SO₄), 5 to 15 wt. % of the carbon source, and 0.05 to 0.5 wt. % of the plurality of live microorganism based on the total weight of the fertilizer composition.

Aspect 12 concerns the fertilizer composition of any one of aspects 1 to 11, comprising 10 to 25 wt. % of nitrogen, 3 to 8 wt. % sulfur, 5 to 15 wt. % calcium, 5 to 15 wt. % carbon, and 0.05 to 0.5 wt. % of the plurality of live microorganism based on the total weight of the fertilizer composition.

Aspect 13 concerns the fertilizer composition of any one of aspects 1 to 12, wherein the fertilizer composition is a solid fertilizer.

Aspect 14 concerns a method of producing the fertilizer composition of any one of aspects 1 to 13, the method comprising:
(a) contacting calcium sulfate (CaSO₄) with nitric acid (HNO₃), to generate a first reaction product comprising calcium nitrate (Ca(NO₃)₂) and sulfuric acid (H₂SO₄); and
(b) contacting the first reaction product with a source of ammonium to generate a second reaction product comprising ammonium sulfate ((NH₄)₂SO₄), wherein the second reaction product further comprises calcium nitrate (Ca(NO₃)₂) generated in step (a),
(c) contacting the second reaction product with a carbon source and a plurality of live microorganisms.

Aspect 15 concerns the method of aspect 14, wherein (c) comprises contacting the second reaction product with the carbon source to form a mixture, then contacting the mixture with the plurality of live microorganisms and mixing.

Aspect 16 concerns the method of any one of aspects 14 to 15, wherein (c) comprises at least partially coating the second reaction product or second reaction product and carbon source with at least a portion of the live microorganisms.

Aspect 17 concerns the method of any one of aspects 14 to 16, wherein the nitric acid is derived from a renewable energy source.

Aspect 18 concerns the method of any one of aspects 14 to 17, wherein the calcium sulfate (CaSO₄) is a waste gypsum.

Aspect 19 concerns the method of aspect 18, wherein the waste gypsum is red gypsum, phosphogypsum, and/or flue gas gypsum.

Aspect 20 concerns a method of fertilizing, the method comprising the fertilizer composition of any one of aspects 1 to 13 to a soil, a crop, water, or any combination thereof.

The following includes definitions of various terms and phrases used throughout this specification.

The term "fertilizer" is defined as a material applied to soils or to plant tissues to supply one or more plant nutrients essential or beneficial to the growth of plants and/or stimulants or enhancers to increase or enhance plant growth. Non-limiting examples of fertilizers include materials having one or more of urea, ammonium nitrate, calcium ammonium nitrate, urea calcium sulfate adduct, one or more superphosphates, binary NP fertilizers, binary NK fertilizers, binary PK fertilizers, NPK fertilizers, molybdenum, zinc, copper, boron, cobalt, and/or iron. In some embodiments, fertilizers include agents that enhance plant growth and/or enhance the ability for a plant to receive the benefit of a fertilizer, such as, but not limited to biostimulants, urease inhibitors, and nitrification inhibitors.

The term "microbe" or "microorganism" can include bacteria, fungi, protists, and/or archaea.

The term "micronutrient" is defined as a chemical element or substance used in trace amounts for the normal growth and development of a plant. Non-limiting examples of micronutrients include B, Cu, Fe, Mn, Mo, Zn, Se, and Si or compounds thereof.

The term "secondary nutrient" is defined as a chemical element or substance used in moderate amounts for plant growth and are less likely to limit crop growth in comparison to N, P, and K. Non-limiting examples of secondary nutrients include Ca, Mg, and S.

The term "organic agent" is defined as a substance that is produced by or part of an organism. Non-limiting examples of organic agents suitable for a fertilizer include neem oil, seaweed extract, bio-stimulants, char, biowaste, ashes from incineration of animal waste or animal tissues, and diatomaceous earth.

The term "granule" can include a solid material. A granule can have a variety of different shapes, non-limiting examples of which include a spherical, a puck, an oval, a rod, an oblong, or a random shape.

The terms "about" or "approximately" are defined as being close to as understood by one of ordinary skill in the art. In one non-limiting embodiment, the terms are defined to be within 10%, preferably within 5%, more preferably within 1%, and most preferably within 0.5%.

The terms "wt.%," "vol.%," or "mol.%" refers to a weight percentage of a component, a volume percentage of a component, or molar percentage of a component, respectively, based on the total weight, the total volume of material, or total moles, that includes the component. In a non-limiting example, 10 grams of component in 100 grams of the material is 10 wt.% of component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification, includes any measurable decrease or complete inhibition to achieve a desired result.

The term "effective," as that term is used in the specification and/or claims, means adequate to accomplish a desired, expected, or intended result.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The words "comprising" (and any form of comprising, such as "comprise" and "comprises"), "having" (and any form of having, such as "have" and "has"), "including" (and any form of including, such as "includes" and "include"), or "containing" (and any form of containing, such as "contains" and "contain") are inclusive or open-ended and do not exclude additional, unrecited elements or method steps.

The microbe-enhanced fertilizer composition and methods of producing the microbe-enhanced fertilizer composition of the present invention can "comprise," "consist essentially of," or "consist of" particular ingredients, components, compositions, steps, etc. disclosed throughout the specification. With respect to the transitional phase "consisting essentially of," in one non-limiting aspect, a basic characteristic of the fertilizer of the present invention is the presence of a microorganism in or on a granulated fertilizer.

### BRIEF DESCRIPTION OF THE DRAWINGS

Advantages of the present invention may become apparent to those skilled in the art with the benefit of the following detailed description and upon reference to the accompanying drawings.
FIG. 1 depicts an exemplary microbe-enhanced fertilizer composition.
FIG. 2 depicts an exemplary microbe-enhanced fertilizer production method.

While the invention is susceptible to various modifications and alternative forms, specific embodiments thereof are shown by way of example in the drawings. The drawings may not be to scale.

### DETAILED DESCRIPTION

Disclosed herein, among other things, is a microbe-enhanced fertilizer and a method of producing a microbe-enhanced fertilizer. The sources of the ingredients can include waste products and green sources. The microbe-enhanced fertilizer composition enables delivery of microorganisms along with each granule of fertilizer, where the microorganism is needed and/or over time as the fertilizer degrades. Additionally, the microbe-enhanced fertilizer composition can have an increased microorganism and/or fertilizer shelf-life.

The methods and/or compositions of the current disclosure provide an economically efficient means to produce and/or utilize a stable and high quality microbe-enhanced fertilizer. These and other non-limiting aspects of the present invention are discussed in further detail in the following sections.

### A. Fertilizer Compositions

The fertilizer composition can comprised of 80 wt. % to 99 wt. % or at least any one of, equal to any one of, or between any two of 80 wt. %, 81 wt. %, 82 wt. %, 83 wt. %, 84 wt. %, 85 wt. %, 86 wt. %, 87 wt. %, 88 wt. %, 89 wt. %, 90 wt. %, 91 wt. %, 92 wt. %, 93 wt. %, 94 wt. %, 95 wt. %, 96 wt. %, 97 wt. %, 98 wt. %, and 99 wt. % of the a combination of calcium nitrate (Ca(NO₃)₂) and ammonium sulfate ((NH₄)₂SO₄). In some aspects, the composition can contain 40 wt. to 85 wt. % or at least any one of, equal to any one of, or between any two of 40 wt. %, 45 wt. %, 50 wt. %, 55 wt. %, 60 wt. %, 65 wt. %, 70 wt. %, 75 wt. %, 80 wt. %, and 85 wt. % of the calcium nitrate. In some aspects, the composition can contain 40 wt. to 85 wt. % or at least any one of, equal to any one of, or between any two of 40 wt. %, 45 wt. %, 50 wt. %, 55 wt. %, 60 wt. %, 65 wt. %, 70 wt. %, 75 wt. %, 80 wt. %, and 85 wt. % of the ammonium sulfate. In certain aspects, the fertilizer composition can contain 2 wt. % to 20 wt. %, or at least any one of, at most any one of, equal to any one of, or between any two of 2, 3, 4, 5, 6, 7, 8, 9, 10, 11, 12, 13, 14, 15, 16, 17, 18, 19, or 20 wt. % of the carbon source. In certain aspects, the fertilizer composition can contain 0.001 wt. % to 1 wt. %, or at least any one of, at most any one of, equal to any one of, or between any two of 0.001, 0.005, 0.01, 0.03, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, or 1 wt. % of the plurality of live microorganism based on the total weight of the fertilizer composition based on the total weight of the composition.

In some aspects, the fertilizer composition may contain 10 to 25 wt. % of nitrogen or at least any one of, at most any one of, equal to any one of, or between any two of 10, 11, 12, 13, 14, 15, 16, 17, 18, 19, 20, 21, 22, 23, 24, or 25 wt. % of nitrogen. In some aspects, the fertilizer composition may contain 3 to 8 wt. % or at least any one of, at most any one of, equal to any one of, or between any two of 3, 4, 5, 6, 7, or 8% of sulfur. In some aspects, the fertilizer composition may contain 5 to 15 wt. % calcium or at least any one of, at most any one of, equal to any one of, or between any two of 5, 6, 7, 8, 9, 10, 11, 12, 13, 14, or 15 wt. % calcium. In some aspects, the fertilizer composition may contain 5 to 15 wt. % of carbon or at least any one of, at most any one of, equal to any one of, or between any two of 5, 6, 7, 8, 9, 10, 11, 12, 13, 14, or 15 wt.% carbon. In some aspects, the fertilizer composition may contain 0.05 to 0.5 wt. % of live microorganism or at least any one of, at most any one of, equal to any one of, or between any two of 0.05, 0.1, 0.15, 0.2, 0.25, 0.3, 0.35, 0.4, 0.45, and 0.5 wt. % of the plurality of live microorganism based on the total weight of the fertilizer composition.

The calcium sulfate in the composition and/or used as a reactant to produce components of the composition can be obtained from waste gypsum. In some aspects, the waste gypsum is red gypsum, phosphogypsum, and/or flue gas gypsum. In some aspects, the phosphogypsum can be obtained from a phosphoric acid manufacturing process. In some aspects, the nitric acid in the composition and/or used as a reactant to produce components of the composition can be derived from a renewable energy source. In some instances, the nitric acid is green nitric acid. In some aspects, the carbon source is derived from a waste source, such as a refinery process. In some aspects, the carbon source is derived from a hydrogen production process. In some aspects, the carbon source is derived from a natural gas and/or a shale gas In some aspects, the carbon source is a carbon black. In some aspects, the carbon source is a porous carbon black. In some aspects, the composition does not contain or is substantially free of a compost, humic acid, Mg, Br, Fe, urea, ammonium nitrate, ammonium phosphate, diammonium phosphate, sulfate of ammonia, muriate of potash, potassium sulfate, magnesium carbonate, silicon, potassium nitrate, phosphate rock, lime, zeolite, hydrochloric acid, leopardite, torrefied organic waste comprising labile carbon, charcoal, urea, and/or calcium cyanamide. In some aspects the fertilizer composition further comprising calcium sulfate (CaSO₄), nitric acid (HNO₃), sulfuric acid (H₂SO₄), and/or ammonium hydroxide (NH₄OH).

The fertilizer can be of any suitable shape. Non-limiting shapes include spherical, cuboidal, cylindrical, puck shape, oval, and oblong shapes. In some aspects, the core can be of cylindrical shape with a circular, elliptical, ovular, triangular, square, rectangular, pentagonal, or hexagonal cross section, although cylindrical shaped core having a cross-section of other shapes can also be made. In some aspects, the core can have a dimension such as length, width, height and/or cross-sectional diameter between 0.5 mm to 5 mm or at least any one of, equal to any one of, or between any two of 0.5 mm, 1 mm, 1.5 mm, 2 mm, 2.5 mm, 3 mm, 3.5 mm, 4 mm, 4.5 mm, and 5 mm. In some particular aspects, the core can have a substantially spherical shape with an average diameter 1 mm to 5 mm or at least any one of, equal to any one of, or between any two of 0.5 mm, 1 mm, 1.5 mm, 2 mm, 2.5 mm, 3 mm, 3.5 mm, 4 mm, 4.5 mm, and 5 mm.

In some other aspects, the fertilizer contains a coating layer that can form a coating over at least a portion of an outer surface of the fertilizer granules/powder/particles. In some aspects, at least a portion of the microorganisms are comprised in a coating of the fertilizer composition. In some aspects, calcium nitrate (Ca(NO₃)₂), ammonium sulfate ((NH₄)₂SO₄), and/or the carbon source are at least partially surrounded with the microorganism. In some aspects, the microorganism is at least partially surrounded by calcium nitrate (Ca(NO₃)₂), ammonium sulfate ((NH₄)₂SO₄), and/or the carbon source.

In some embodiments, a microorganism that can be included in a microbe-enhanced fertilizer can be a bacteria, archaea, fungi, or a protist. In some instances, the microorganism can include an endophyte, rhizosphere microbe, and/or phyllosphere microbe. In some embodiments, the microorganism can included more than one species of microorganism. In some embodiments, more than one species, genus, phylum, class, and/or kingdom can be represented in a group of microorganisms protected and/or included in a microbe-enhanced fertilizer. In some embodiments, a microorganism can be cultured and/or grown in a laboratory. In some embodiments, a microorganism can be obtained from a natural source. In some embodiments, a microorganism can be a spore/cyst forming microorganism. In some embodiments, a microorganism can be a spore/cyst forming bacteria.

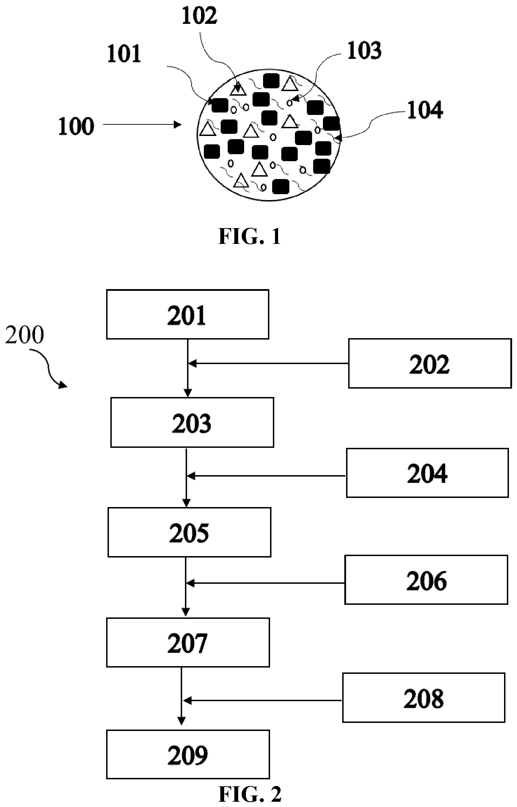

Referring to FIG. 1 a fertilizer granule 100 according to an example of the present invention is shown. The fertilizer granule (100) can contain a major portion of calcium nitrate (101) and ammonium sulfate (102) in the core, and a minor portion of carbon black (103) and a plurality of live microorganisms (104). In Fig. 1, the carbon black and microorganisms (103 and 104) are uniformly distributed throughout the fertilizer granules. In some instances, the fertilizer granule is homogenous. In some instances, the fertilizer granule is not homogenous. In some instances, the fertilizer granule is coated with a coating. In some instances, the fertilizer granule is coated with a coating containing any one of or a combination of calcium nitrate, ammonium sulfate, carbon black, and/or live microorganisms. In some instances, the fertilizer granules or the fertilizer compositions further comprise other fertilizers, micronutrients, primary nutrients, additional urea, additional nitrogen nutrients, insecticides, herbicides, or fungicides, or combinations thereof.

The fertilizer granules can have desirable physical properties such as desired levels of abrasion resistance, granule strength, pelletizability, hygroscopicity, granule shape, and size distribution, which are important properties for the fertilizer core.

The fertilizer granules described herein can be comprised in a composition useful for application to soil, water, and/or a crop. In addition to the fertilizer granules, the composition may include other fertilizer compounds, micronutrients, primary nutrients, additional urea, additional nitrogen nutrients, insecticides, herbicides, or fungicides, or combinations thereof.

The fertilizer granules described herein can also be included in a blended composition comprising other fertilizer granules. The other fertilizer granules can be granules of urea, monoammonium phosphate (MAP), diammonium phosphate (DAP), muriate of potash (MOP), monopotassium phosphate (MKP), triple super phosphate (TSP), rock phosphate, single super phosphate (SSP), ammonium sulfate, and the like.

### B. Microorganisms

In some embodiments, a microorganism that can be included in a microbe-enhanced fertilizer can be a bacteria, archaea, fungi, or a protist. In some instances, the microorganism can include an endophyte, rhizosphere microbe, and/or phyllosphere microbe. In some embodiments, the microorganism can included more than one species of microorganism. In some embodiments, more than one species, genus, phylum, class, and/or kingdom can be represented in a group of microorganisms protected and/or included in a microbe-enhanced fertilizer.

In some embodiments, a microorganism can be, but is not limited to, a diazotrophic bacteria, Azospirillum species, Azotobacter species, Frateuria aurantia, Bacillus species, endophytes, nitrogen fixing bacteria, methylotrophs, comammox (e.g., (COMplete AMMonia OXidation) an organism that can convert ammonia into nitrite and then into nitrate through the process of nitrification), phosphorus solubilizing, nitrite oxidizing, Nitrospira species, Methylobacterium species, and/or pink pigmented facultative methylotrophs (PPFM-trophs).

In some embodiments, a microorganism can be cultured and/or grown in a laboratory prior to addition into the fertilizer. In some embodiments, a microorganism can be obtained from a natural source. In some embodiments, a microorganism can be concentrated prior to addition into the fertilizer.

In some embodiments, a microorganism can be a spore/cyst forming microorganism. In some embodiments, a microorganism can be a spore/cyst forming bacteria. In some embodiments, a microorganism can be induced to form spores/cysts prior to addition to the fertilizer. In some embodiments, a microorganism is not induced to form spores/cysts prior to and/or as part of a protection scheme. In some embodiments, a microorganism is not chemically induced to form spores/cysts prior to and/or as part of a protection scheme. In some embodiments, a protected microorganism has been selected for heat tolerance. In some embodiments, a protected microorganism as not been selected for heat tolerance.

In some embodiments, microorganisms can be cultured and/or concentrated to greater than, or equal to, approximately 10⁴-10¹³ cells per mL prior to addition to the fertilizer. In some embodiments, microorganisms can be cultured and/or concentrated to greater than, or equal to, approximately 10⁸-10⁹ cells per mL prior to addition to the fertilizer.

Prior to contacting with a fertilizer to obtain a microbe-enhanced fertilizer, microorganisms may be protected. In some embodiments, microorganism protection may comprise any one or more of encapsulation, physical protection, and/or engineering methods. In some embodiments, microorganism protection is by contact with a protectant. In some instances, microorganism protection is by encapsulation in a protectant. In some embodiments, a protected microorganism is protected by addition of one or more physical protectants, engineering methods, encapsulating agents, water-soluble additives, stabilizer additives, and/or dispersants.

In some embodiments, microorganism protection can comprise encapsulation with a stabilizer protectant. In some embodiments, a stabilizer comprises one or more of clay, diatomaceous earth, starch, agar, alginate, chitosan, PEG, PVA, -polyacrylic acid, ethanol, humic acid, humates, talc, clay, peat, lignite, vermiculite, perlite and/or chemically modified versions of the same.

In some embodiments, chemical modification of a stabilizer can comprise, but is not limited to, one or more of esterification, alkylation, acetylation, phosphorylation, hydrophobic modification, sulfation, sulfomethylation, methylation, amidation, amination, protonation, halogenation, nitration, copolymerization, and/or physical or covalent cross-linking.

In some embodiments, protection of a microorganism can also comprise addition of a water-soluble additive protectant. In some embodiments, a water soluble additive can be but is not limited to, glycerol, carboxy methyl cellulose (CMC), polyvinyl pyrrolidone (PVP), gum Arabic, guar gum, and/or mono and/or disaccharide based CMC/Arabic gum/guar gum.

In some embodiments, microorganism protection can comprise improved stickiness, stabilization, and surfactant and dispersal abilities. In some embodiments, such characteristics can be provided by protectants/inducers and nutrients (e.g. Alginates/Glycerol/polyvinyl alcohol, PEG/PVP, Clay/humate, Mono and disaccharides, CMC/Arabic gum/guar gum).

In some embodiments, protection can comprise inclusion of certain stabilizers and/or additives at set proportions, including but not limited to 1:0.05, 1:0.10, 1:0.15, 1:0.20, 1:0.25, 1:0.30, 1:0.35, 1:0.40, 1:0.45, 1:0.50, 1:0.55, 1:0.60, 1:0.65, 1:0.70, 1:0.75, 1:0.80, 1:0.85, 1:0.90, 1:0.95, 1:1, 1:1.05, 1:1.10, 1:1.15, 1:1.20, 1:1.25, 1:1.30, 1:1.35, 1:1.40, 1:1.45, 1:1.5, 1:1.55, 1:1.60, 1:1.65, 1:1.70, 1:1.75, 1:1.80, 1:1.85, 1:1.90, 1:1.95, 1:2, 1:3, 1:4, 1:5, 1:10, 1:20, 1:30, 1:40, 1:50, 1:60, 1:70, 1:80, 1:90, 1:100, 1:1,000, 1:10,000, 1:100,000, 1:1,000,000, or any range derivable therein.

In some embodiments, microorganisms can be cultured and/or concentrated to greater than, or equal to, approximately 10⁴-10¹³ cells per mL prior to addition to the fertilizer. In some embodiments, microorganisms can be cultured and/or concentrated to greater than, or equal to, approximately 10⁸-10⁹ cells per mL prior to addition to the fertilizer.

In some embodiments, physical protection and/or engineering methods facilitate pelleting and/or layering of microorganisms as a liquid solution at the core or around a core of a fertilizer granule. In some embodiments, a bolus of concentrated microbes in a liquid carrier are protected with a soluble additive, such as in a slurry.

In some embodiments, physical protection of microorganisms may comprise addition of protectants that are molecules and/or enzymes derived from thermophiles (e.g., heat tolerant bacteria), these molecules and/or enzymes may contribute to the thermo-protection phenotypes observed in thermophiles (see e.g., Pedro Lamosa et al., Thermostabilization of Proteins by Diglycerol Phosphate, a New Compatible Solute from Hyperthermophile Archaeoglobus fulgidus. Applied and Environmental Microbiology, Vol. 66, No. 5, 01 May 2000). Molecules and/or enzymes derived from thermophiles include proteins, lipids, saccharides, nucleic acids, small molecules, and/or inorganic compounds. Thermophiles may include bacteria, archaea, protists, and/or fungi. Thermophile microorganisms may include microorganisms that can thrive, divide, and/or survive at temperatures of 50 °C or greater. A non-limiting example of a thermophile is *Archaeoglobus fulgidus*.

In some embodiments, engineering methods for the protection of microorganisms may comprise spray drying and/or freeze-drying of the microorganisms. Freeze-drying can be performed by freezing the microorganisms or a composition containing the microorganisms, exposing the frozen microorganism or composition containing the microorganism to pressures below atmospheric pressures, and removing ice from or surrounding the frozen microorganism or composition. The composition containing the microorganism can contain, in some instances, a cryoprotectant, encapsulating agent, water-soluble additive, stabilizer additive, and/or a dispersant.

In some embodiments, a microorganism is contacted with a protectant using a spray, liquid stream, semi-solid, or solid (such as a powder) comprising said protectant. In some embodiments, a protectant is contacted with a microorganism using a spray, liquid stream, semi-solid, or solid (such as a powder) comprising said microorganism.

In some embodiments, a protected microorganism is concentrated (e.g., settlement, centrifugation, affinity capture, selective growth media, etc.,) prior to contact with a protectant and/or prior to protecting. In some embodiments, a protected microorganism is contacted with the protectant or with the fertilizer at a concentration of higher than 10¹² cells per gram of the protectant. In some embodiments, a protectant is comprised in a liquid, suspension, and/or dried powder.

In some embodiments, a protected microorganism can contain low amounts of moisture. In some embodiments, a free-moisture content of a protected microorganism can be less than 0.6 wt.%, less than 0.5 wt.% water or 0.25 wt.% to less than 0.6 wt.% water. In some instances, the free moisture content is 0.5, 0.4, 0.3, 0.2, 0.1, or 0 wt.%.

### C. Methods of Making Fertilizer Compositions

A method of producing the fertilizer composition comprising calcium nitrate (Ca(NO₃)₂), ammonium sulfate ((NH₄)₂SO₄), a carbon source, and a plurality of live microorganisms is disclosed. In some aspects, the method comprises one or more of the following steps:
(a) contacting calcium sulfate (CaSO₄) with nitric acid (HNO₃), to generate a first reaction product comprising calcium nitrate (Ca(NO₃)₂) and sulfuric acid (H₂SO₄);
(b) contacting the first reaction product with a source of ammonium to generate a second reaction product comprising ammonium sulfate ((NH₄)₂SO₄), wherein the second reaction product further comprises calcium nitrate (Ca(NO₃)₂) generated in step (a), and
(c) contacting the second reaction product and/or the first reaction product with a carbon source and/or a plurality of live microorganisms.

In step a, the first reaction product comprises calcium nitrate (Ca(NO₃)₂) and sulfuric acid (H₂SO₄) can be formed by contacting red gypsum, phosphogypsum, and/or flue gas gypsum with nitric acid (equation 1).

CaSO₄ + 2HNO₃ ↔ Ca(NO₃)₂+ H₂SO₄ (1)

In some aspects, the nitric acid contacted with the calcium sulfate (e.g., red gypsum, phosphogypsum, and/or flue gas gypsum) can contain 10 wt. % to 40 wt. % or at least any one of, equal to any one of, or between any two of 10 wt. %, 15 wt. %, 20 wt. %, 25 wt. %, 30 wt. %, 35 wt. %, and 40 wt. %, of water. In some aspects, a phosphogypsum having 2 wt. % to 30 wt. % or at least any one of, equal to any one of, or between any two of 2 wt. %, 5 wt. %, 10 wt. %, 15 wt. %, 20 wt. %, 25 wt. % and 30 wt. % of moisture can be contacted with nitric acid to form the calcium nitrate. In some aspects, the calcium nitrate and ammonium sulfate mixture slurry/ granules, or gel can contain 10 wt. % to 40 wt. % or at least any one of, equal to any one of, or between any two of 10 wt. %, 15 wt. %, 20 wt. %, 25 wt. %, 30 wt. %, 35 wt. %, and 40 wt. %, of water. Nitric acid can be contacted with calcium sulfate at molar ratio of 3:1 to 5:1 or at least any one of, equal to any one of, or between any two of 3:1, 3.5:1, 4:1, 4:5 and 5:1 of nitric acid to calcium sulfate, such as to calcium sulfate contained in phosphogypsum. In some aspects, the nitric acid and calcium sulfate can be contacted at 40 °C to 90 °C, or at least any one of, equal to any one of, or between any two of 40 °C, 45 °C, 50 °C, 55 °C, 60 °C, 65 °C, 70 °C, 75 °C, 80 °C, 85 °C, and 90 °C. In certain aspects, the mixture can be dried at 35 °C, 40 °C, 45 °C, 50 °C, 55 °C, 60 °C, 65 °C, 70 °C, 75 °C, 80 °C, 85 °C, 90 °C, 95 °C, 100 °C or greater, or any temperature or range thereof or there between to form a dried mixture. The amount of water, e.g., moisture, in the dried mixture can be less than 0.6 wt.%, 0.5 wt.%, 0.4 wt.%, 0.3 wt.%, 0.2 wt.%, 0.1 wt.%, or less, or any amount or range thereof or there between.

In step b, the ammonium hydroxide (NH₄OH) can contact the formed first reaction product to form a second reaction product (equation 2) comprising ammonium sulfate ((NH₄)₂SO₄). In some instances, the second reaction product further comprises calcium nitrate (Ca(NO₃)₂) generated in step (a).

2NH₄OH + Ca(NO₃)₂+ H₂SO₄→ (NH₄)₂SO₄ + Ca(NO₃)₂ (2)

In certain aspects, the second reaction product forms particles, granules, or a gel, or any combination thereof.

In step c, contacting the second reaction product with the carbon source can form a mixture comprising calcium nitrate, ammonium sulfate, and the carbon source, such as carbon black. In some instances, step c further comprises contacting the mixture with the plurality of live microorganisms and mixing to form a fertilizer paste. The fertilizer paste can then be pelletized, such as a pellet with a size of 2 x3 mm. The pellets may be dried at 65 °C to 95 °C, or at least any one of, equal to any one of, or between any two of 65, 70, 75, 80, 85, 90, and 95 °C for a period of time, such as 24 hours.

In some instances, step (c) comprises contacting the second reaction product with the carbon source to form a mixture, then contacting the mixture with the plurality of live microorganisms and mixing. The pellets formed in this method may comprise at least a partial coating of live microorganisms on the second reaction product or on the second reaction product and carbon source.

FIG. 2 shows a flow chart of a method 200 for making a fertilizer granule according to one example of the present invention. Referring to FIG. 2, a nitric acid 201 can be contacted with a waste gypsum 202 to form a first reaction product comprising calcium nitrate (Ca(NO₃)₂) and sulfuric acid (H₂SO₄) 203, the first reaction product 203 can be contacted with an ammonium hydroxide (NH₄OH) solution 204 to form a second reaction product comprising ammonium sulfate ((NH₄)₂SO₄) and calcium nitrate (Ca(NO₃)₂) 205. The second reaction product 205 can be coated with carbon source containing an amorphous carbon black 206 to form a mixture comprising calcium nitrate, ammonium sulfate and carbon black 207, the mixture 207 can be coated with a plurality of live microorganisms 208 to form a final fertilizer granule 209.

In some embodiments, microbe-enhanced fertilizers of the present disclosure comprise any granulatable fertilizer (e.g., granular fertilizer). In some embodiments, a microbe-enhanced fertilizer comprises or excludes one or more granular fertilizers, preferably but not limited to, one or more of urea, single super phosphate (SSP), triple super phosphate (TSP), ammonium sulfate, monoammonium phosphate (MAP), diammonium phosphate (DAP), muriate of potash (MOP), sulfate of potash (SOP), potassium sulfate, binary NP fertilizers, binary NK fertilizers, binary PK fertilizers, and/or a nitrogen phosphorus potassium (NPK) mix.

In some embodiments, fertilizer granulation comprises chemically reacting reactants to form the fertilizer. In some embodiments, the fertilizer is formed from or is provided in a solution. In some embodiments, the fertilizer is formed or is provided in a fertilizer melt. The fertilizer melt can be formed, in some instances by evaporating a fertilizer solution. In some instances, the fertilizer is formed from or is provided in a solidified fertilizer. The solidified fertilizer can be formed, in some instances by cooling a fertilizer melt. In some instances, the fertilizer is formed from or is provided in a granulated fertilizer. The granulated fertilizer can be formed, in some instances by granulating the solidified fertilizer melt or a cooling fertilizer melt.

As described herein, in some embodiments, a microbe-enhanced fertilizer is produced when a microorganism is contacted with the fertilizer before or during granulation.

In some embodiments, a fertilizer dryer can be heated by steam, such as in a steam jacketed dryer. In some embodiments, a fertilizer dryer can be or can be part of a rotating dryer. In some embodiments, a granulator can be separate from a dryer. In some embodiments, a dryer and granulator can be the same vessel or part of a same vessel. In some embodiments, a granulator, may include a rotatable section, a rotatable internal container, and/or a section that vibrates. In some embodiments, the rotatable section and/or rotatable internal container may contain internal flights and/or be rotated to induce movement of a fertilizer composition in the granulator. In some embodiments, a granulator can be or can be part of a granulation drum, pugmill, pan granulator, etc.

In some embodiments, water or an aqueous solution, such as steam and/or a scrubber solution, can be combined with a fertilizer composition in granulator to facilitate granulation of a fertilizer composition.

In some embodiments, a microorganism or a protected microorganism is contacted with a fertilizer by spraying onto a fertilizer particle and/or granule, by mixing into a fertilizer, by spraying a fertilizer onto the microorganism, by coating a fertilizer, by being coated by a fertilizer, by being encapsulated in a fertilizer matrix, by encapsulating a fertilizer to form a matrix of the microorganism, etc.

In some embodiments, a microorganism or a protected microorganism is contacted with a fertilizer using a spray, liquid stream, semi-solid, or solid (such as a powder) comprising said microorganism. In some embodiments, a microorganism is contacted with a fertilizer using a dosage pump or a spray head.

In some embodiments, a microorganism or a protected microorganism is concentrated (e.g., settlement, centrifugation, affinity capture, selective growth media, etc.,) prior to contact with a fertilizer to form a microbe-enhanced fertilizer. In some embodiments, the microorganism is contacted with the fertilizer at a concentration of 10⁴-10¹² cells per gram of the fertilizer. In some preferred embodiments, a microorganism or a protected microorganism is contacted with the fertilizer at a concentration of 10⁸-10⁹ cells per gram of the fertilizer. In some embodiments, a microorganism is comprised in a liquid, suspension, and/or dried powder.

In some embodiments, a microbe-enhanced fertilizer particle can have a crush strength of 1, 2, 3, 4, 5, 6, 7, 8, 9, 10 kgf/particle, or more, or any amount there between, preferably 2 kgf/particle to 5 kgf/particle.

In some embodiments, a microbe-enhanced fertilizer can contain a coating on the surface of one or more particles. In some instances, the coating can include nutrients for a plant, inhibitors of urea hydrolysis and/or nitrification, agents to slow or increase the rate of degradation of the granule and/or fertilizers, agents to repel moisture and/or provide a hydrophobic layer, agents that decrease or increase the reactivity of the granule and/or fertilizers, agents that provide additional benefits to plants, agents that increase the stability and/or crush strength of the granule and/or fertilizers, pH buffering agents, drying agents, etc. or any combination thereof. The coating can be a commercially available coating, an oil, a fertilizer, a micronutrient, talc, a seaweed and/or seaweed extract, a wax, etc. In some instances, the coating can contain surfactants. In some instances, the coating contains a wax, surfactants, and/or an amine-based compound.

### D. Methods of Using Microbe-enhanced Fertilizers

In some embodiments, microbe-enhanced fertilizer compositions of the present disclosure can be used in methods of increasing the amount of one or more nutrients and one or more microorganisms in soil, and of enhancing plant growth. In some embodiments, methods can include applying to the soil an effective amount of a composition microbe-enhanced fertilizers of the present disclosure. In some embodiments, methods may include increasing the growth and yield of crops, trees, ornamentals, etc. such as, for example, palm, coconut, rice, wheat, corn, barley, oats, and soybeans. In some embodiments, methods can include applying microbe-enhanced fertilizer of the present disclosure to at least one of a soil, an organism, a liquid carrier, a liquid solvent, etc. (e.g., a target substrate).

In some embodiments, a microbe-enhanced fertilizer can be stored. In some embodiments, the microbe-enhanced fertilizer can be stored for any amount of time, such as 1 minute, 10 minutes, 30 minutes, 1 hour, 2 hours, 4 hours, 8 hours, 12 hours, 16 hours, 1 day, 2 days, 5 days, 1 week, 2 weeks, 3 weeks, 4 weeks, 1 month, 2 months, 3 months, 4 months, 5 months, 6 months, 1 year, 2 years, 3 years, 4 years, 5 years or more, or any amount of time or range thereof or there between without 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, or 100 % of the microorganisms in the micro-enhanced fertilizer dying. In some embodiments, the microorganisms and/or fertilizer components of the microbe-enhanced fertilizer composition have an extended shelf life relative to microbe-enhanced fertilizers created through traditional methods.

In some embodiments, once a microbe-enhanced fertilizer is applied to a target substrate, microorganism protection materials degrade under field conditions and release the protected microorganisms to deliver their bio-effects.

Non-limiting examples of plants that can benefit from the microbe-enhanced fertilizer of the present invention include vines, trees, shrubs, stalked plants, ferns, etc. The plants may include orchard crops, vines, ornamental plants, food crops, timber, and harvested plants. The plants may include Gymnosperms, Angiosperms, and/or Pteridophytes. The Gymnosperms may include plants from the Araucariaceae, Cupressaceae, Pinaceae, Podocarpaceae, Sciadopitaceae, Taxaceae, Cycadaceae, and Ginkgoaceae families. The Angiosperms may include plants from the Aceraceae, Agavaceae, Anacardiaceae, Annonaceae, Apocynaceae, Aquifoliaceae, Araliaceae, Arecaceae, Asphodelaceae, Asteraceae, Berberidaceae, Betulaceae, Bignoniaceae, Bombacaceae, Boraginaceae, Burseraceae, Buxaceae, Canellaceae, Cannabaceae, Capparidaceae, Caprifoliaceae, Caricaceae, Casuarinaceae, Celastraceae, Cercidiphyllaceae, Chrysobalanaceae, Clusiaceae, Combretaceae, Cornaceae, Cyrillaceae, Davidsoniaceae, Ebenaceae, Elaeagnaceae, Ericaceae, Euphorbiaceae, Fabaceae, Fagaceae, Grossulariaceae, Hamamelidaceae, Hippocastanaceae, Illiciaceae, Juglandaceae, Lauraceae, Lecythidaceae, Lythraceae, Magnoliaceae, Malpighiaceae, Malvaceae, Melastomataceae, Meliaceae, Moraceae, Moringaceae, Muntingiaceae, Myoporaceae, Myricaceae, Myrsinaceae, Myrtaceae, Nothofagaceae, Nyctaginaceae, Nyssaceae, Olacaceae, Oleaceae, Oxalidaceae, Pandanaceae, Papaveraceae, Phyllanthaceae, Pittosporaceae, Platanaceae, Poaceae, Polygonaceae, Proteaceae, Punicaceae, Rhamnaceae, Rhizophoraceae, Rosaceae, Rubiaceae, Rutaceae, Salicaceae, Sapindaceae, Sapotaceae, Simaroubaceae, Solanaceae, Staphyleaceae, Sterculiaceae, Strelitziaceae, Styracaceae, Surianaceae, Symplocaceae, Tamaricaceae, Theaceae, Theophrastaceae, Thymelaeaceae, Tiliaceae, Ulmaceae, Verbenaceae, and/or Vitaceae family.

In some embodiments, the effectiveness of compositions comprising microbe-enhanced fertilizers of the present invention can be ascertained by measuring the amount of particular nutrients in the soil at various times after applying the microbe-enhanced fertilizer composition to the soil. In some embodiments, the effectiveness of compositions comprising microbe-enhanced fertilizers of the present invention can be ascertained by measuring the amount of the microorganism in the soil at various times after applying the microbe-enhanced fertilizer composition to the soil. It is understood that different soils have different characteristics, which can affect the stability nutrients and microorganisms in the soil. In some embodiments, effectiveness of a microbe-enhanced fertilizer composition can be directly compared to other fertilizer compositions by doing a side-by-side comparison in the same soil under the same conditions.

In some embodiments, microbe-enhanced fertilizers according to the present disclosure can have a density that is greater than water. This can allow the granules and/or fertilizers to sink in water rather than float. This can be especially beneficial in instances where application is intended to a crop that is at least partially or fully submerged in water. A non-limiting example of such a crop is rice, as the ground in a rice paddy is typically submerged in water. Thus, application of microbe-enhanced fertilizers to such crops can be performed such that the granules and/or fertilizer are homogenously distributed on the ground that is submerged under water.

### EXAMPLES

The present invention will be described in greater detail by way of specific examples. The following examples are offered for illustrative purposes only, and are not intended to limit the invention in any manner. Those of skill in the art will readily recognize a variety of noncritical parameters which can be changed or modified to yield essentially the same results

### Example 1

42 ml HNO₃ (70%) was added to a beaker with a volume of 1000 ml. Gradually 40 g of calcium sulfate was added to the beaker. The mixture was stirred at 140 rpm with heating to a maximum temperature of 65°C. The mixture was stirred for 1 hour and then 58 ml NH₄OH having concentration 40% was added. The mixture continued stirring for 2 hour and produced a gel. Amorphous carbon black was added to the gel in amount of 10% weight in relation to the total weight of fertilizer. Microorganisms were added at 0.1-0.5% of the fertilizer paste. The material was then pushed through a funnel and pelletized to a size of 2 x3 mm. The pellets were dried at 88°C for 24 hours.

The final product contained the following amount of nutrients: N 19.6%, S 5.7%, Ca 10.9%, C 10%, and microorganisms 0.1-0.5%.

## Claims

1. A fertilizer composition comprising calcium nitrate (Ca(NO₃)₂), ammonium sulfate ((NH₄)₂SO₄), a carbon source, and a plurality of live microorganisms, wherein the carbon source comprises char, activated carbon, carbon black, and/or coal.

2. The fertilizer composition of claim 1, wherein the microorganisms comprise diazotrophic bacteria, *Azospirillum* species, *Azotobacter* species, *Frateuria aurantia*, *Bacillus* species, endophytes, nitrogen fixing microorganism, methylotrophs, comammox microorganism, phosphorus solubilizing microorganism, *Nitrospira* species, *Methylobacterium* species, and/or pink pigmented facultative methylotrophs (PPFM-trophs).

3. The fertilizer composition of claim 1 or 2, wherein the composition does not comprise one or more of the group consisting of compost, humic acid, Mg, Br, Fe, urea, ammonium nitrate, ammonium phosphate, potassium nitrate, phosphate rock, lime, zeolite, and calcium cyanamide.

4. The fertilizer composition of any one of claims 1 to 3, wherein:
the carbon source is derived from a refinery process and/or a hydrogen production process; and/or
the carbon source is derived from a natural gas and/or a shale gas.

5. The fertilizer composition of any one of claims 1 to 4, wherein at least a portion of the microorganisms are comprised in a coating of the fertilizer composition.

6. The fertilizer composition of any one of claims 1 to 5, wherein the calcium nitrate (Ca(NO₃)₂), ammonium sulfate ((NH₄)₂SO₄), and/or carbon source at least partially surrounds the microorganism.

7. The fertilizer composition of any one of claims 1 to 6, wherein:
the carbon source is a carbon black; and/or
the carbon source is a porous carbon black.

8. The fertilizer composition of any one of claims 1 to 7, further comprising calcium sulfate (CaSO₄), nitric acid (HNO₃), sulfuric acid (H₂SO₄), and/or ammonium hydroxide (NH₄OH).

9. The fertilizer composition of any one of claims 1 to 8, comprising 84 to 94.95 wt. % of a combination of the calcium nitrate (Ca(NO₃)₂) and the ammonium sulfate ((NH₄)₂SO₄), 5 to 15 wt. % of the carbon source, and 0.05 to 0.5 wt. % of the plurality of live microorganism based on the total weight of the fertilizer composition.

10. The fertilizer composition of any one of claims 1 to 9, comprising 10 to 25 wt. % of nitrogen, 3 to 8 wt. % sulfur, 5 to 15 wt. % calcium, 5 to 15 wt. % carbon, and 0.05 to 0.5 wt. % of the plurality of live microorganism based on the total weight of the fertilizer composition.

11. The fertilizer composition of any one of claims 1 to 10, wherein the fertilizer composition is a solid fertilizer.

12. A method of producing the fertilizer composition of any one of claims 1 to 11, the method comprising:
(a) contacting calcium sulfate (CaSO₄) with nitric acid (HNO₃), to generate a first reaction product comprising calcium nitrate (Ca(NO₃)₂) and sulfuric acid (H₂SO₄); and
(b) contacting the first reaction product with a source of ammonium to generate a second reaction product comprising ammonium sulfate ((NH₄)₂SO₄), wherein the second reaction product further comprises calcium nitrate (Ca(NO₃)₂) generated in step (a),
(c) contacting the second reaction product with a carbon source and a plurality of live microorganisms.

13. The method of claim 12, wherein:
(c) comprises contacting the second reaction product with the carbon source to form a mixture, then contacting the mixture with the plurality of live microorganisms and mixing; and/or
(c) comprises at least partially coating the second reaction product or second reaction product and carbon source with at least a portion of the live microorganisms; and/or
the nitric acid is derived from a renewable energy source.

14. The method of claim 12 or 13, wherein the calcium sulfate (CaSO₄) is a waste gypsum, optionally wherein the waste gypsum is red gypsum, phosphogypsum, and/or flue gas gypsum.

15. A method of fertilizing, the method comprising the fertilizer composition of any one of claims 1 to 11 to a soil, a crop, water, or any combination thereof.
